# EUROPEAN PATENT APPLICATION

(11) **EP 4 779 829 A1**
(43) Date of publication of application: **22.07.2026**
(21) Application number: 23952057.0
(22) Date of filing: 29.11.2023
(51) Int. Cl.: H02H 7/122

(54) **INVERTER AND ABNORMAL SHUTDOWN METHOD AND APPARATUS THEREFOR, AND PHOTOVOLTAIC SYSTEM**

(30) Priority: 14.09.2023 CN 202311188081
(71) Applicant: Sungrow Power Supply Co., Ltd., Hefei, Anhui 230088 (CN)
(72) Inventor: LI, Bijie, Hefei, Anhui 230088 (CN); ZHANG, Jingjing, Hefei, Anhui 230088 (CN); YANG, Yongchang, Hefei, Anhui 230088 (CN); WU, Fenglei, Hefei, Anhui 230088 (CN); YU, Yanfei, Hefei, Anhui 230088 (CN)
(74) Representative: Epping - Hermann - Fischer
(86) International application number: PCT/CN2023/134937
(87) International publication number: WO 2025/055134

(57) **Abstract**

The present application relates to the technical field of photovoltaics, and provides an inverter and an abnormal shutdown method and apparatus therefor, and a photovoltaic system. For an inverter circuit, a switch module, and a controller of the present application, a plurality of switches are connected in series in the switch module, an input end of the inverter circuit is connected to a direct current source, an output end of the inverter circuit is connected to a power grid by means of the switch module, and a control end of at least one switch among the plurality of switches is independently connected to the controller. The switch module is configured to: when turned on, transmit an alternating current outputted by the output end of the inverter circuit to the power grid, and when turned off, suspend transmission of the alternating current outputted by the output end of the inverter circuit. The controller is configured to: when a short circuit occurs in the inverter, turn off a drive of the inverter and disconnect at least one switch, in the switch module, independently connected to the controller. Therefore, by controlling the switches, in the switch module, independently connected to the controller, connections to the inverter circuit and the power grid can be disconnected by means of the switch module, so that the problem of a short circuit of the inverter can be handled in time.

## Description

This application claims the priority to Chinese Patent Application No. 202311188081.8, titled "INVERTER AND ABNORMAL SHUTDOWN METHOD AND APPARATUS THEREFOR, AND PHOTOVOLTAIC SYSTEM", filed on September 14, 2023 with the China National Intellectual Property Administration, which is incorporated herein by reference in its entirety.

### FIELD

The present disclosure relates to the field of photovoltaic technology, and in particular to an inverter, a method for shutting down an inverter operating abnormally, an apparatus for shutting down an inverter operating abnormally, and a photovoltaic system.

### BACKGROUND

When an inverter is short circuited, for example, a positive terminal and a negative terminal of a bus are short circuited to ground or an abnormal insulation of a photovoltaic panel cable to ground occurs, a photovoltaic (PV) solar panel short-circuit loop to ground may be formed. Thus, the inverter may be damaged, and it is required to shut down the inverter timely.

### SUMMARY

In view of this, an inverter, a method for shutting down an inverter operating abnormally, an apparatus for shutting down an inverter operating abnormally, and a photovoltaic system are provided according to the embodiments of the present disclosure to shut down the inverter timely, thereby reducing damage to the inverter caused by a short-circuit loop of the inverter.

In a first aspect, an inverter is provided according to the present disclosure. The inverter includes: an inverter circuit, a switch module, and a controller. The switch module includes multiple switches connected in series. An input terminal of the inverter circuit is connected to a direct-current power source, and an output terminal of the inverter circuit is connected to a power grid through the switch module. A control terminal of at least one switch of the multiple switches is connected to the controller. The inverter circuit is configured to invert a direct-current power outputted from the direct-current power source to an alternating-current power. The switch module is configured to transmit the alternating-current power outputted from the output terminal of the inverter circuit to the power grid in response to the switch module being turned on, and stop transmitting the alternating-current power outputted from the output terminal of the inverter circuit in response to the switch module being turned off. The controller is configured to, in response to determining that the inverter is short circuited, turn off a drive of the inverter, and turn off the at least one switch in the switch module that is connected to the controller.

In an embodiment, the inverter circuit is a multi-phase inverter circuit, and an output terminal of each of phase branches of the multi-phase inverter circuit is connected to a switch module. Control terminals of switches in all switch modules are independently connected to the controller; or control terminals of first switches in the switch modules are independently connected to the controller, and control terminals of second switches in a same switch group are jointly connected to the controller. The second switches in the same switch group correspond one-to-one with the switch modules in the inverter, the first switches in each of the switch modules include a part of switches in the switch module, and the second switches include switches other than the first switches in the switch module.

In an embodiment, in response to the control terminals of the switches in all the switch modules being independently connected to the controller, each of the control terminals of the switches is connected to the controller through a corresponding connection line, and the connection line is configured to transmit a switch turn-off signal or a switch turn-on signal sent by the controller.

In an embodiment, the controller is further configured to: for each of the phase branches of the inverter circuit, control a switch in the switch module corresponding to the phase branch of the inverter circuit to be turned off based on a current at the output terminal of the phase branch; and send switch turn-off signals to closed switches in all the switch modules connected to the inverter circuit simultaneously or sequentially, to control the closed switches in the switch modules connected to the inverter circuit to be turned off.

In an embodiment, in response to the control terminals of the first switches in all the switch modules being independently connected to the controller and the control terminals of the second switches in the same switch group being jointly connected to the controller, each of the control terminals of the first switches is connected to the controller through a corresponding connection line, and the control terminals of the second switches in the same switch group are connected to the controller through a same connection line. The connection lines are configured to transmit a switch turn-off signal or a switch turn-on signal sent by the controller.

In an embodiment, each of the switch modules includes one first switch, and the controller is further configured to: for each of the phase branches of the inverter circuit, control a first switch in a switch module corresponding to the phase branch of the inverter circuit to be turned off based on a current at the output terminal of the phase branch; and send a switch turn-off signal to the switch group included in the inverter to control the second switches in the switch group to be turned off.

In an embodiment, each of the switch modules includes at least two first switches, and the controller is further configured to: for each of the phase branches of the inverter circuit, control one of two first switches in a switch module corresponding to the phase branch of the inverter circuit to be turned off based on a current at the output terminal of the phase branch; and send a switch turn-off signal to the switch group included in the inverter and closed first switches to control the second switches in the switch group and the closed first switches to be turned off.

In an embodiment, the controller is further configured to, after determining that a usage of a current predetermined switch meets a predetermined condition, determine a switch other than the current predetermined switch from a switch module corresponding to the predetermined switch as a next predetermined switch. The predetermined condition includes a predetermined usage duration condition or a predetermined usage number condition. The predetermined switch is determined in advance by the controller for controlling the corresponding switch module to be turned off. The predetermined switch is arranged with an independent connection line for connecting to the controller.

In an embodiment, the case that the inverter is short circuited includes a cable of a photovoltaic panel corresponding to the inverter being short circuited to ground and a positive terminal and a negative terminal of a bus being short circuited to ground. The controller is further configured to: in response to meeting a first abnormal condition for the cable of the photovoltaic panel corresponding to the inverter being short circuited to the ground, determine that the cable of the photovoltaic panel is short circuited to the ground; and in response to meeting a second abnormal condition for the positive terminal and the negative terminal of the bus being short circuited to the ground, determine that the positive terminal and the negative terminal of the bus are short circuited to the ground. The first abnormal condition includes: an absolute value of a sum of vector values of currents simultaneously acquired at output terminals of N phase branches of an N-phase inverter being greater than a first threshold, where N>1, and the first threshold is a maximum absolute value of the sum of the vector values of the currents simultaneously acquired from the N phase branches while a power converter operates normally; or current acquired at output terminals of N phase branches of an N-phase alternating-current power being all positive, where N>1; or current acquired at output terminals of any two phase branches of N phase branches of an N-phase alternating-current power being both positive, where N>2; or a current acquired at an output terminal of at least one phase branch of N phase branches exceeding a predetermined value, and a voltage acquired at the output terminal of the phase branch corresponding to the acquired current being positive, where the predetermined value is equal to a value of a current acquired at the output terminal of the phase branch while a power converter operates normally, the value of the acquired current is an average value or a maximum value determined after performing multiple acquisitions on the phase branch based on a switching frequency of the first switch, and the multiple acquisitions include current instantaneous effective value acquisitions or current instantaneous peak value acquisitions. The second abnormal condition includes: a descending slope of a voltage of the bus being greater than a descending slope of a voltage of the bus operating normally, and a minimum voltage of the bus being less than an operating voltage of the inverter.

In a second aspect, a method for shutting down an inverter operating abnormally is further provided according to the present disclosure. The method is applied to the controller in the inverter described above. The method includes: turning off a drive of the inverter in response to determining that the inverter is short circuited; continuously acquiring an electrical parameter at the output terminal of each of the phase branches of the inverter circuit, where the electrical parameter includes a voltage or/and a current; determining, for each of the phase branches, a zero-crossing time instant of the current of the phase branch based on the acquired electrical parameter of the phase branch; and turning off a predetermined switch in a switch module corresponding to the phase branch based on the zero-crossing time instant, where the predetermined switch is determined in advance by the controller for controlling the switch module to be turned off, and a control terminal of the predetermined switch is connected to the controller.

In an embodiment, the inverter is short circuited due to that a cable of a photovoltaic panel corresponding to the inverter is short circuited to ground. The determining, for each of the phase branches, a zero-crossing time instant of the current of the phase branch based on the acquired electrical parameter of the phase branch includes: determining a time instant at which a voltage acquired at the output terminal of the phase branch changes from negative to positive for a first time as a first zero-crossing time instant of the current of the phase branch; or determining, in response to a current acquired at the output terminal of the phase branch descending over time, a second zero-crossing time instant of the current of the phase branch based on a descending slope of the current, and subtracting a switch-off delay time period from the second zero-crossing time instant to obtain a signal time instant. The turning off a predetermined switch in a switch module corresponding to the phase branch based on the zero-crossing time instant includes: sending a switch turn-off signal to the predetermined switch in the switch module corresponding to the phase branch in a predetermined time period starting from the first zero-crossing time instant or the signal time instant, to turn off the predetermined switch, where the predetermined time period is equal to a time period between a time instant at which the voltage acquired at the output terminal of the phase branch changes from negative to positive for the first time and a time instant at which the voltage acquired at the output terminal of the phase branch changes from positive to negative for a first time.

In an embodiment, the inverter is short circuited due to that a positive terminal and a negative terminal of a bus are short circuited to ground. The determining, for each of the phase branches, a zero-crossing time instant of the current of the phase branch based on the acquired electrical parameter of the phase branch includes: determining, in response to a current acquired at the output terminal of the phase branch descending over time, the zero-crossing time instant of the current of the phase branch based on a descending slope of the current. The turning off a predetermined switch in a switch module corresponding to the phase branch based on the zero-crossing time instant includes: subtracting a switch-off delay time period from the zero-crossing time instant to obtain a signal time instant, and determining a target current value corresponding to the signal time instant based on the descending slope; and sending, in response to an absolute value of a difference between the value of the acquired current and the target current value being less than a target threshold, a switch turn-off signal to the predetermined switch in the switch module corresponding to the phase branch to turn off the predetermined switch, where the target threshold is equal to a difference between values of currents obtained in two adjacent acquisitions.

In a third aspect, an apparatus for shutting down an inverter operating abnormally is further provided according to the present disclosure. The apparatus is applied to the controller in the inverter described above. The apparatus includes: a processing unit, an acquisition unit, a calculation unit, and a control unit. The processing unit is configured to turn off a drive of the inverter in response to determining that the inverter is short circuited. The acquisition unit is configured to continuously acquire an electrical parameter at the output terminal of each of the phase branches of the inverter circuit, where the electrical parameter includes a voltage or/and a current. The calculation unit is configured to determine, for each of the phase branches, a descending slope of the electrical parameter in response to the electrical parameter acquired at the output terminal of the phase branch descending over time, and determine a zero-crossing time instant of the electrical parameter. The control unit is configured to turn off a predetermined switch in a switch module corresponding to the phase branch based on the zero-crossing time instant, where the predetermined switch is determined in advance by the controller for controlling the switch module to be turned off, and a control terminal of the predetermined switch independently is connected to the controller.

In a fourth aspect, a photovoltaic system is further provided according to the present disclosure. The photovoltaic system includes a solar panel string and an inverter. The solar panel string is connected to an input terminal of the inverter, and the solar panel string is configured to provide a direct-current power to the inverter. An output terminal of the inverter is connected to a power grid. The inverter is configured to convert a direct-current power from a direct-current power supply to an alternating-current power and transmit the alternating-current power to the power grid. The inverter is the inverter described above.

According to the embodiments of the present disclosure, an inverter, a method for shutting down an inverter operating abnormally, an apparatus for shutting down an inverter operating abnormally, and a photovoltaic system are provided. In the inverter according to the present disclosure, the switch module includes multiple switches connected in series, an input terminal of the inverter circuit is connected to a direct-current power source, an output terminal of the inverter circuit is connected to a power grid through the switch module, and a control terminal of at least one switch of the multiple switches is connected to the controller. The controller is configured to, in response to determining that the inverter is short circuited, turn off a drive of the inverter, and turn off the at least one switch in the switch module that is connected to the controller. In this way, the connection between the inverter circuit and the power grid through the switch module can be disconnected by turning off the switch in the switch module that is connected to the controller, thereby reducing the damage to the inverter caused by short- circuited inverter.

### BRIEF DESCRIPTION OF THE DRAWINGS

To clearly illustrate technical solutions in embodiments of the present disclosure or the related technology, drawings to be used in the embodiments or the related technology are introduced briefly hereinafter. Apparently, the drawings described below show only some embodiments of the present disclosure. For those skilled in the art, other drawings may be obtained based on the provided drawings without any creative effort.
FIG. 1 is a schematic diagram of an inverter circuit according to an embodiment of the present disclosure;
FIG. 2 is a schematic structural diagram of an inverter circuit according to another embodiment of the present disclosure;
FIG. 3 (a-f) is a schematic diagram showing a connection structure between a controller and a switch through a connection line according to the present disclosure;
FIG. 4 is a schematic structural diagram of an inverter circuit according to another embodiment of the present disclosure;
FIG. 5 is a flowchart of an abnormal shutdown method for an inverter according to an embodiment of the present disclosure;
FIG. 6 is a flowchart of a method for shutting down an inverter operating abnormally according to an embodiment of the present disclosure; and
FIG. 7 is a schematic structural diagram of an apparatus for shutting down an inverter operating abnormally according to an embodiment of the present disclosure.

### DETAILED DESCRIPTION

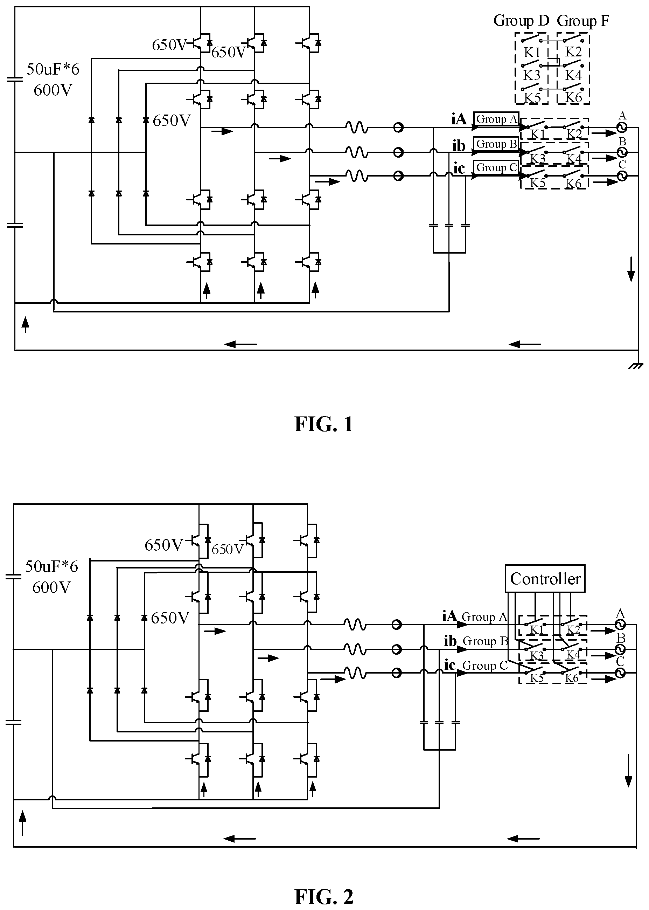

An inverter may be damaged due to being short circuited. For example, an insulation issue of a photovoltaic panel cable to ground has become an industry-level issue for a TN protective zero terminating system, with over half of photovoltaic system failures caused by this issue. When an abnormal insulation of a photovoltaic panel cable to ground occurs, a photovoltaic (PV) solar panel short-circuit loop to ground may be formed. Referring to a schematic diagram of an inverter circuit shown in FIG. 1, a loop indicated by arrows may causes damage to the inverter. Therefore, it is required to turn off the inverter timely.

In the related technology, after the drive of the inverter is turned off, it is further required to turn off output terminals of multiple phase branches of the inverter. In the schematic diagram of an inverter circuit as shown in FIG. 1, K1, K3 and K5 are controlled to be turned off through a relay group D, and K2, K4 and K6 are controlled to be turned off through a relay group F, to control the output terminals of multiple phase branches of the inverter. However, in turning off the output terminals of the multiple phase branches of the inverter, turning off one relay may cause large currents flowing through the other relays due to the different phases of the three phase branches, resulting in damage to the relays.

For solving the above issues, a switch module for sequentially turning off output terminals of phase branches of the inverter is arranged according to the present disclosure. A switch module is arranged corresponding to each of the output terminals of the phase branches. Each of the switch modules includes multiple switches connected in series. All switches in the switch modules may be independently connected to the controller; or control terminals of first switches in the switch modules are independently connected to the controller, and control terminals of second switches in a same switch group are jointly connected to the controller. The second switches in the same switch group correspond one-to-one with the switch modules in the inverter. Thus, the controller may sequentially control the independently connected switches in the switch modules to turn off the switch modules, avoiding arcing. Furthermore, according to the present disclosure, the drive of the inverter is turned off, and then the switch modules corresponding to the phase branches are turned off sequentially, avoiding damage to the inverter caused by the photovoltaic (PV) solar panel short-circuit loop to ground due to the abnormal insulation of the photovoltaic panel cable to ground.

In addition, multiple redundant switches may be arranged in the switch modules, and the switches may be used alternately, thereby extend the service life of the switches.

Apparently, the embodiments described below are only some embodiments, rather than all the embodiments of the present disclosure. Based on the embodiments of the present disclosure, all other embodiments obtained by those skilled in the art without any creative effort fall within the protection scope of the present disclosure.

FIG. 2 is a schematic structural diagram of an inverter circuit according to another embodiment of the present disclosure. Referring to FIG. 2, an inverter includes an inverter circuit, a switch module, and a controller.

The switch module includes multiple switches connected in series. An input terminal of the inverter circuit is connected to a direct-current power source, and an output terminal of the inverter circuit is connected to a power grid through the switch module. A control terminal of at least one switch of the multiple switches is independently connected to the controller.

For each of phase branches of the inverter circuit, an output terminal of the phase branch is connected with a switch module.

The inverter circuit may be a single-phase inverter circuit or a multi-phase inverter circuit. For example, the inverter shown in FIG. 2 is a three-phase inverter, and the inverter circuit is a three-phase inverter circuit. For the three-phase inverter circuit shown in FIG. 2, a switch module A, a switch module B and a switch module C are arranged.

Each of the switch modules includes at least two switches connected in series. For example, the switch module A includes a switch K1 and a switch K2 connected in series.

An input terminal of the inverter circuit is connected to a direct-current power source, and an output terminal of the inverter circuit is connected to a power grid through a switch module.

The direct-current power source may be powered by a solar panel string or by a module that can provide direct-current power (such as a storage battery).

The output terminal of the inverter circuit is connected to the power grid through a switch module. For example, the switch module A includes K1 and K2 connected in series, and transmits power to the power grid through a port A. Similarly, power corresponding to different phase branches is transmitted to the power grid respectively through a port B and a port C. As shown in FIG. 1, power from phase branches is transmitted respectively through port A, port B and port C.

The inverter circuit is configured to convert a direct-current power outputted from the direct-current power source to an alternating-current power.

The switch module is configured to transmit the alternating-current power outputted from the output terminal of the inverter circuit to the power grid in response to the switch module being turned on, and stop transmitting the alternating-current power outputted from the output terminal of the inverter circuit in response to the switch module being turned off.

The controller is configured to, in response to determining that the inverter is short circuited, turn off a drive of the inverter, and turn off the at least one switch in the switch module that is connected to the controller.

For example, as shown in FIG. 2, for each of phase branches of the inverter circuit, a switch in the switch module corresponding to the phase branch is controlled to be turned off based on a current at an output terminal of the phase branch.

According to the inverter described above, the switch module in the inverter includes multiple switches connected in series. An input terminal of the inverter circuit is connected to the direct-current power source, and an output terminal of the inverter circuit is connected to the power grid through the switch module. A control terminal of at least one switch of the multiple switches is independently connected to the controller. In this way, after the drive of the inverter is turned off, the connection between the inverter circuit and the power grid through the switch module can be disconnected by turning off the switch in the switch module that is independently connected to the controller, thereby reducing the damage to the inverter caused by short- circuited inverter.

In the embodiments of the present disclosure, multiple implementations for the connection between the controller and the switches in the switch module shown in FIG. 2 may be performed, and are described below. It should be noted that the implementations described below are merely illustrative, and do not represent all implementations of the present disclosure.

In an implementation, the inverter may be a single-phase inverter, and the phase branch of the inverter corresponds to a switch module. Control terminals of all the switches included in the switch module are connected to the controller through a same connection line. The controller may send a switch turn-off signal to a predetermined switch in the switch module to control the switch module to be turned off, and then the controller may send a switch turn-off signal to the closed switches in the switch module to turn off all the closed switches.

In another implementation, the inverter circuit is a multi-phase inverter, and an output terminal of each of phase branches in the multi-phase inverter circuit is connected to a switch module.

In a first implementation, as shown in FIG. 2, control terminals of switches in all the switch modules are independently connected to the controller.

In this implementation, before controlling the switch modules to be turned off (disconnecting the paths for the phase branches transmitting power to the power grid), the controller may determine a current predetermined switch for controlling the switch module to be turned off based on a cumulative usage time length or a cumulative usage times of each of the switches in the switch module for controlling the switch module to be turned off. In addition, the predetermined switch may be manually determined in the controller. After a predetermined switch for each of the switch modules is determined in the controller, the controller may, in response to determining to turn off a switch module, send a switch turn-off signal to a predetermined switch in the switch module to control the switch module to be turned off.

For example, in the switch module A shown in FIG. 2, K1 may be used as the predetermined switch, or K2 may be used as the predetermined switch. The alternating usage of K1 and K2 may extend the service life of the switch module A. The switches used in the present disclosure are relays. In turning off a relay, the relay may be impacted by current, which may affect the service life of the relay. The controller regulates the alternately used predetermined switches in the switch module, extending the service life of the switch module and reducing maintenance on the switch module.

Corresponding to the connection between the controller and the switches in the switch module, an arrangement of a connection line is provided as follows.

A control terminal of each of the switches is connected to the controller through a connection line, and the connection line is configured for transmitting a switch turn-off signal or a switch-on signal sent by the controller.

For example, as shown in FIG. 2, a connection line is arranged between the controller and each of K1, K2, K3, K4, K5 and K6. The controller may send a switch turn-off signal or a switch-on signal to K1 through the connection line corresponding to K1, and the same applies to K2, K3, K4, K5 and K6.

For example, in controlling a switch in the switch module A to be turned off based on a current of the phase branch connected to the switch module A, the switch may be configured in the controller in advance. For example, K1 is configured as the predetermined switch, and then the controller may send a switch turn-off signal to K1 through the connection line corresponding to K1 to turn off K1. After K1 is used multiple times to disconnect the switch module A, the controller may adjust the predetermined switch from K1 to K2, to extend the service life of the switches and reduce circuit maintenance.

The controller is further configured to: for each of the phase branches of the inverter circuit, control a switch in the switch module corresponding to the phase branch of the inverter circuit to be turned off based on a current at the output terminal of the phase branch; and send switch turn-off signals to closed switches in all the switch modules connected to the inverter circuit simultaneously or sequentially, to control the closed switches in the switch modules connected to the inverter circuit to be turned off.

For example, based on a current at an output terminal of each of the phase branches of the inverter circuit, a switch in the switch module corresponding to the phase branch is controlled to be turned off. For example, as shown in FIG. 2, based on the current of each of the phase branches, a predetermined switch K1 in the switch module A is controlled to be turned off, a predetermined switch K4 in the switch module B is controlled to be turned off, and a predetermined switch K5 in the switch module C is controlled to be turned off. Then, the controller sends switch turn-off signals to switches K2, K3 and K6 respectively through the connection line for K2, the connection line for K3 and the connection line for K6 simultaneously, to turn off K2, K3 and K6. The controller may sent switch turn-off signals to the switches K2, K3 and K6 sequentially through the connection line for K2, the connection line for K3 and the connection line for K6 respectively, to turn off K2, K3 and K6 sequentially.

In a second implementation, control terminals of first switches in the switch modules are independently connected to the controller, and control terminals of second switches in the same switch group are jointly connected to the controller. The second switches in the same switch group correspond one-to-one with the switch modules in the inverter. The first switches in the switch module include a part of switches in the switch module, and the second switches include switches other than the first switches in the switch module.

In an embodiment, each of the switch modules includes one first switch. The controller is further configured to: for each of the phase branches of the inverter circuit, control a first switch in a switch modules corresponding to the phase branch of the inverter circuit to be turned off based on a current at the output terminal of the phase branch; and send a switch turn-off signal to the switch group included in the inverter to control the second switches in the switch group to be turned off.

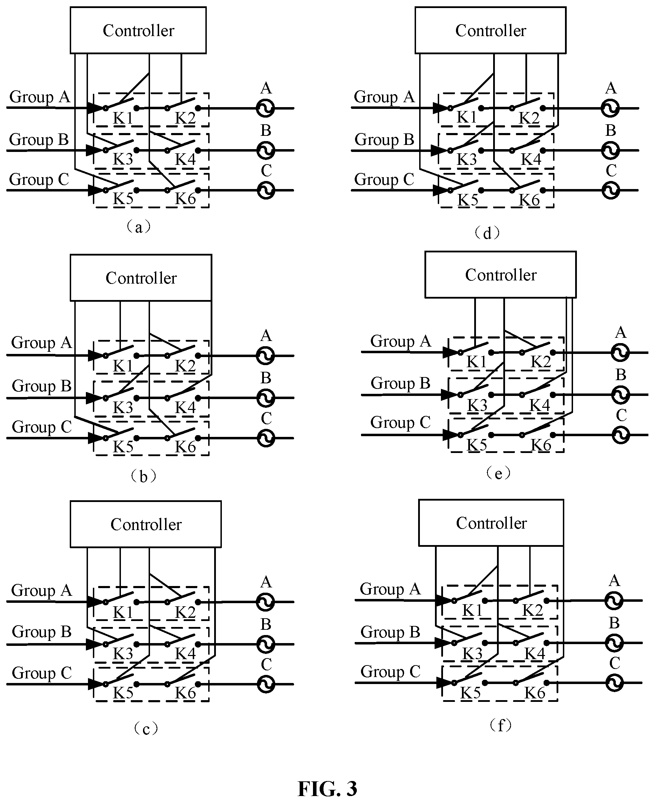

For example, reference is made to FIG. 3(a)-(f), which is a schematic diagram showing a connection structure between a controller and a switch through a connection line according to the present disclosure.

In FIG. 3(a), the first switches include K2, K3 and K5, each of which is connected to the controller through a connection line; and the second switches include K1, K4 and K6, which are connected to the controller through a same connection line. Based on the currents at the output terminals of all the phase branches of the inverter circuit, the controller controls K2, K3 and K5 to be turned off sequentially and then controls K1, K4 and K6 to be turned off simultaneously through the same connection line.

In FIG. 3(b), the first switches include K1, K4 and K5, each of which is connected to the controller through a connection line; and the second switches include K2, K3 and K6, which are connected to the controller through a same connection line. Based on the currents at the output terminals of all the phase branches of the inverter circuit, the controller controls K1, K4 and K5 to be turned off sequentially and then controls K2, K3 and K6 to be turned off simultaneously through the same connection line.

In FIG. 3(c), the first switches include K1, K3 and K6, each of which is connected to the controller through a connection line; and the second switches include K2, K4 and K5, which are connected to the controller through a same connection line. Based on the currents at the output terminals of all the phase branches of the inverter circuit, the controller controls K1, K3 and K6 to be turned off sequentially and then controls K2, K4 and K5 to be turned off simultaneously through the same connection line.

In FIG. 3(d), the first switches include K2, K4 and K5, each of which is connected to the controller through a connection line; and the second switches include K1, K3 and K6, which are connected to the controller through a same connection line. Based on the currents at the output terminals of all the phase branches of the inverter circuit, the controller controls K2, K4 and K5 to be turned off sequentially and then controls K1, K3 and K6 to be turned off simultaneously through the same connection line.

In FIG. 3(e), the first switches include K1, K4 and K6, each of which is connected to the controller through a connection line; and the second switches include K2, K3 and K5, which are connected to the controller through a same connection line. Based on the currents at the output terminals of all the phase branches of the inverter circuit, the controller controls K1, K4 and K6 to be turned off sequentially and then controls K2, K3 and K5 to be turned off simultaneously through the same connection line.

In FIG. 3(f), the first switches includes K2, K34 and K6, each of which is connected to the controller through a connection line; and the second switches include K12, K4 and K5, which are connected to the controller through a same connection line. Based on the currents at the output terminals of all the phase branches of the inverter circuit, the controller controls K2, K3 and K6 to be turned off sequentially and then controls K1, K4 and K5 to be turned off simultaneously through the same connection line.

Based on the above examples, any one of switches in a switch module may be determined as a predetermined switch, and control terminals of the remaining switches may be connected to the controller through a same connection line, thereby reducing the configuration number of the connection lines.

In an embodiment, each of the switch modules includes multiple first switches. The controller is further configured to, for each of the phase branches of the inverter circuit, control one of the first switches in a switch module corresponding to the phase branch of the inverter circuit to be turned off based on a current at the output terminal of the phase branch; and send a switch turn-off signal to the switch group included in the inverter and closed first switches to control the second switches in the switch group and the closed first switches to be turned off.

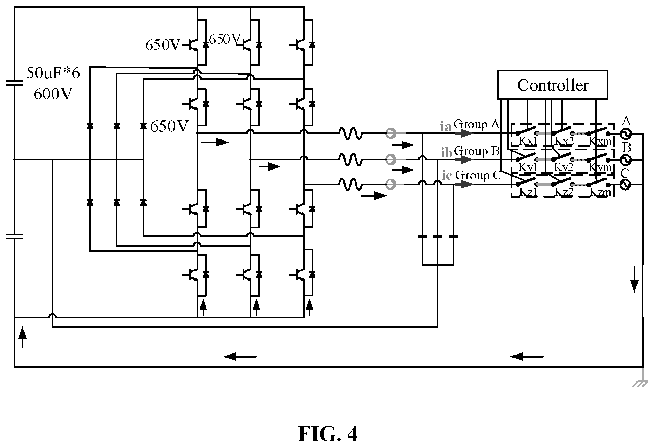

For example, reference is made to FIG. 4, which is a schematic structural diagram of an inverter circuit according to another embodiment of the present disclosure. The first switches in switch module A may include Kx1 and Kx2, which are connected to the controller respectively through two different connection lines (where it is apparently that the first switches in switch module A may further include other switches). The first switches in switch module B may include Ky1 and Ky2, which are connected to the controller respectively through two different connection lines (where it is apparently that the first switches in switch module B may further include other switches). The first switches in switch module C may include Kz1 and Kz2, which are connected to the controller respectively through two different connection lines (where it is apparently that the first switches in switch module C may further include other switches). Kxm in the switch module A, Kym in the switch module B, and Kzm in the switch module C form a switch group (where it is apparently that multiple other switch groups may be configured). Kxm, Kym and Kzm in the switch group are connected to the controller through a same connection line.

For example, based on a current at an output terminal of each of phase branches of the inverter circuit, the predetermined switch in the switch module corresponding to the phase branch is controlled to be turned off. For example, as shown in FIG. 3, based on the current of each of the phase branches, a first switch KX1 in the switch module A is controlled to be turned off, a first switch Ky1 in the switch module B is controlled to be turned off, and a first switch Kz1 in the switch module C is controlled to be turned off. Then, the controller sends switch turn-off signals to switches Kx2, Ky2 and Kz2 respectively through a connection line for Kx2, a connection line for Ky2 and a connection line for Kz2, and sends a switch turn-off signal to the switch group including Kxm, Kym and Kzm through a connection line for the switch group, to turn off Kx2, Ky2, Kz2, and Kxm, Kym and Kzm in the switch group. Alternatively, the controller may send a switch turn-off signal sequentially through the connection line for Kx2, the connection line for Ky2, the connection line for Kz2, and the connection line for the switch group, to turn off Kx2, Ky2, Kz2, and the switch group sequentially (where Kxm, Kym and Kzm in the switch group are turned off simultaneously).

In addition, the controller is further configured to, after determining that a usage of a current predetermined switch meets a predetermined condition, determine another switch from the switch module corresponding to the current predetermined switch as a next predetermined switch. The predetermined condition includes a predetermined usage duration condition or a predetermined usage number condition. The predetermined switch is configured in advance by the controller for controlling the corresponding switch module to be turned off. The predetermined switch is arranged with an independent connection line for connecting to the controller.

For example, the controller may determine the first switch Kx1 in the switch module A as the predetermined switch. After determining that a cumulative usage duration or a usage number of Kx1 exceeds a predetermined condition, the controller may determine Kx2 as a next predetermined switch to replace Kx1 for turning off the switch module A, thereby extending the service lives of the switches. Similarly, Ky1 and Ky2 may be used as the predetermined switch alternately, and Kz1 and Kz2 may be used as the predetermined switch alternately.

Based on the above-described inverter, the controller may be configured to determine whether the inverter is short circuited. That the inverter is short circuited includes a cable of a photovoltaic panel corresponding to the inverter being short circuited to ground and a positive terminal and a negative terminal of a bus being short circuited to ground.

The controller is further configured to: in response to meeting a first abnormal condition for the cable of the photovoltaic panel corresponding to the inverter being short circuited to the ground, determine that the cable of the photovoltaic panel is short circuited to the ground; and in response to meeting a second abnormal condition for the positive terminal and the negative terminal of the bus being short circuited to the ground, determine that the positive terminal and the negative terminal of the bus are short circuited to the ground.

The first abnormal condition includes: an absolute value of a sum of vector values of currents simultaneously acquired at output terminals of N phase branches of an N-phase inverter being greater than a first threshold, where N>1, and the first threshold is a maximum absolute value of the sum of the vector values of the currents simultaneously acquired from the N phase branches while a power converter operates normally; or currents acquired at output terminals of N phase branches of an N-phase alternating-current power being all positive, where N>1; or currents acquired at output terminals of any two phase branches of N phase branches of an N-phase alternating-current power being both positive, where N>2; or a current acquired at an output terminal of at least one phase branch of N phase branches exceeding a predetermined value, and a voltage acquired at the output terminal of the phase branch corresponding to the acquired current being positive, where the predetermined value is equal to a value of a current acquired at the output terminal of the phase branch while a power converter operates normally, the value of the acquired current is an average value or a maximum value determined after performing multiple acquisitions on the phase branch based on a switching frequency of the first switch, and the multiple acquisitions include current instantaneous effective value acquisitions or current instantaneous peak value acquisitions.

The second abnormal condition includes: a descending slope of a voltage of the bus being greater than a descending slope of a voltage of the bus operating normally, and a minimum voltage of the bus being less than an operating voltage of the inverter.

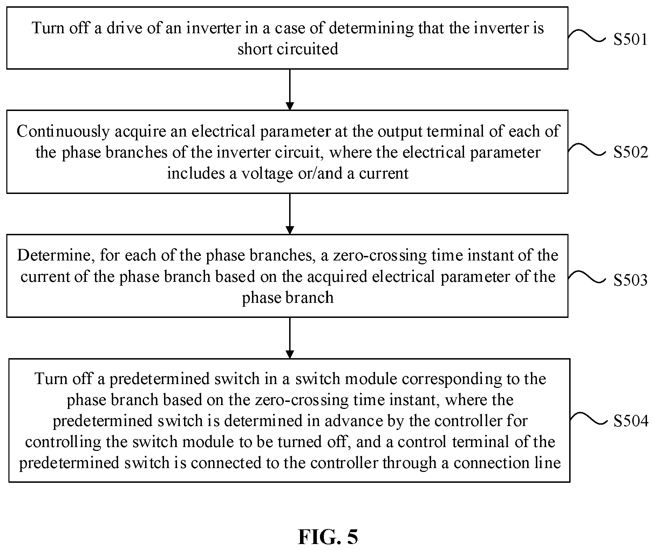

Based on the inverter described above and with reference to a flowchart of method for shutting down an inverter operating abnormally shown in FIG. 5, a method for shutting down an inverter operating abnormally is further provided according to the present disclosure. The method is applied to the controller in the inverter described above. The method includes the following steps S501 to S504.

In step S501, a drive of the inverter is turned off in response to determining that the inverter is short circuited.

That the inverter is short circuited may include a bus being short circuited, a photovoltaic panel cable being short circuited to ground, and the like.

The drive of the inverter is turned off, and the conversion from a direct-current power to an alternating-current power is stopped, protecting the components of the inverter.

In step S502, an electrical parameter at the output terminal of each of the phase branches of the inverter circuit is continuously acquired. The electrical parameter includes a voltage or/and a current.

For example, the electrical parameter at the output terminal of each of the phase branches of the inverter circuit is continuously acquired may be performed by acquiring current multiple times in a phase cycle of the phase branch.

In step S503, for each of the phase branches, a zero-crossing time instant of the current of the phase branch is determined based on the acquired electrical parameter of the phase branch.

In step S504, a predetermined switch in a switch module corresponding to the phase branch is turned off based on the zero-crossing time instant. The predetermined switch is determined in advance by the controller for controlling the switch module to be turned off, and the predetermined switch is configured with an independent connection line for connecting to the controller.

It can be seen from the above steps S501 to S504 that according to the present disclosure, the driver of the inverter is turned off on determining that the inverted is short circuited, the conversion from a direct-current power to an alternating-current power is stopped, and a first switch for a phase branch is turned off at a zero-crossing time instant of the electrical parameter of the phase branch to avoid arcing. In this way, the photovoltaic panel cable is insulated from ground, the inverter is protected from damage, and the breaking current of the relay is reduced, thereby improving the reliability of the relay.

In the embodiments of the present disclosure, the process of determining that the inverter is short circuited in step S501 shown in FIG. 5 may be implemented in multiple manners, which are described below. It should be noted that the implementation manners described below are merely illustrative, and do not represent all implementations of the present disclosure.

In an embodiment, it is determined that the inverter is short circuited by: determining that a photovoltaic panel cable of the inverter is short circuited to ground.

In an embodiment, the process of determining that a photovoltaic panel cable of the inverter is short circuited to ground may be performed in the following implementation manners A1 to A3.

In an implementation manner A1, an absolute value of a sum of vector values of currents simultaneously acquired at output terminals of N phase branches of an N-phase inverter is greater than a first threshold, where N>1. The first threshold is a maximum absolute value of the sum of the vector values of the currents simultaneously acquired from the N phase branches while a power converter operates normally.

Taking the three-phase inverter shown in FIG. 2 as an example, a sum of vector values of currents of the three phase branches of the inverter is 0 when the inverter operates normally. However, when the insulation of the photovoltaic panel cable to ground is abnormal, as shown in FIG. 2, a photovoltaic (PV) solar panel short-circuit loop to ground is formed (which is indicated by arrows in FIG. 2), and the three phase branches are connected with each other through diodes in bridge arms of the inverter. Due to that diodes are unidirectional conductive, the largest current among the currents of the three phase branches may flow to the other two phase branches through the diodes, thus the sum of the vector values of the currents of the three phase branches is not equal to 0. Therefore, in response to the absolute value of the sum of vector values of the currents simultaneously acquired from the three phase branches of the three-phase alternating-current power being greater than a first threshold, it is determined that the power converter operates abnormally. The first threshold is a maximum absolute value of the sum of the vector values of the currents simultaneously acquired from the three phase branches while the power converter operates normally.

In an implementation manner A2, currents acquired at output terminals of N phase branches of an N-phase alternating-current power being all positive, where N>1; or currents acquired at output terminals of any two phase branches of N phase branches of an N-phase alternating-current power being both positive, where N>2.

Taking the three-phase inverter in FIG. 2 as an example, in response to an phase angle of the three-phase current of the inverter being abnormal, it may be determined that the inverter operates abnormally, and it is required to turn off the inverter.

In an implementation manner A3, a current acquired at an output terminal of at least one phase branch of N phase branches exceeding a predetermined value, and a voltage acquired at the output terminal of the phase branch corresponding to the acquired current being positive. The predetermined value is equal to a value of a current acquired at the output terminal of the phase branch while a power converter operates normally.

The value of the acquired current is an average value or a maximum value determined after performing multiple acquisitions on the phase branch based on a switching frequency of the first switch, and the multiple acquisitions include current instantaneous effective value acquisitions or current instantaneous peak value acquisitions.

In an embodiment, it is determined that the inverter is short circuited by: determining that a positive terminal and a negative terminal of a bus are short circuited to ground.

In an embodiment, the process of determining that a positive terminal and a negative terminal of a bus are short circuited to ground may be performed in the following implementation manner B.

In an implementation manner B, a descending slope of a voltage of the bus is greater than a descending slope of a voltage of the bus operating normally, and a minimum voltage of the bus being is than an operating voltage of the inverter.

Corresponding to the different processes of determining that the inverter is short circuited described above, different operations may be performed in the steps S503 and S504. When it is determined that the inverter is short circuited due to that a cable of a photovoltaic panel corresponding to the inverter is short circuited to ground, the operations performed in the steps S503 and S504 in FIG. 5 are described below. It should be noted that the operations in the following descriptions are merely illustrative, and do not represent all operations of the present disclosure.

The for each of the phase branches, a zero-crossing time instant of the current of the phase branch may be determined based on the acquired electrical parameter of the phase branch by: determining, by the controller, a time instant at which a voltage acquired at the output terminal of the phase branch changes from negative to positive for a first time as a first zero-crossing time instant of the current of the phase branch; or determining, by the controller in response to a current acquired at the output terminal of the phase branch descending over time, a second zero-crossing time instant of the current of the phase branch based on a descending slope of the current, and subtracting a switch-off delay time period from the second zero-crossing time instant to obtain a signal time instant.

It may be determined that an acquired current descends over time by determining that a difference obtained by subtracting a currently acquired current value from a next acquired current value is negative.

The descending slope may be determined using a fitted curve formed based on the acquired current values, or may be calculated based on coordinates of two acquired current values in a current-time coordinate system where an absolute value of the latter current value is less than an absolute value of the former current value among the two acquired current values.

The switch-off delay time period is determined based on a mechanical time period required for turning off a relay switch. The controller sends a switch turn-off signal to the predetermined switch to control the predetermined switch (relay) to be turned off. The relay is turned off at the end of the mechanical time period. For each of the phase branches, the phase branch is turned off at the zero-crossing time instant of the electrical parameter of the phase branch at which the relay can be safely turned off, reducing impact of large currents on contacts of the relay, avoiding arcing, and protecting the switch.

The predetermined switch in the switch module corresponding to the phase branch is turned off based on the zero-crossing time instant by: sending, by the controller, a switch turn-off signal to the predetermined switch in the switch module corresponding to the phase branch in a predetermined time period starting from the first zero-crossing time instant or the signal time instant, to turn off the predetermined switch. The predetermined time period is equal to a time period between a time instant at which the voltage acquired at the output terminal of the phase branch changes from negative to positive for the first time and a time instant at which the voltage acquired at the output terminal of the phase branch changes from positive to negative for a first time.

For example, as shown in FIG. 2, the inverter is short circuited due to that a photovoltaic panel cable is short circuited to ground. In response to the voltage being positive, a diode may be reversely cut off and the current is 0. During the time period between a time instant at which the voltage acquired at the output terminal of the corresponding phase branch changes from negative to positive for the first time and a time instant at which the voltage acquired at the output terminal of the corresponding phase branch changes from positive to negative for the first time, the voltage is positive, and the diode is reversely cut off. During this time period, the current reaches a minimum value, remaining at the zero-crossing time instant. Therefore, the predetermined switch may be turned off in a predetermined time period starting from the first zero-crossing time instant or the signal time instant.

In an embodiment of the present disclosure, when it is determined that the inverter is short circuited due to that a positive terminal and a negative terminal of a bus are short circuited, the operations performed in the steps S503 and S504 in FIG. 5 are described below. It should be noted that the operations in the following descriptions are merely illustrative, and do not represent all operations of the present disclosure.

For each of the phase branches, the zero-crossing time instant of the current of the phase branch may be determined based on the acquired electrical parameter of the phase branch by: determining, by the controller in response to a current acquired at the output terminal of the phase branch descending over time, the zero-crossing time instant of the current of the phase branch based on a descending slope of the current.

It may be determined that an acquired electrical parameter descends over time by determining that a difference obtained by subtracting a currently acquired current value from a next acquired current value is negative.

The descending slope may be determined using a fitted curve formed based on the acquired current values, or may be calculated based on coordinates of two acquired current values in a current-time coordinate system where an absolute value of the latter current value is less than an absolute value of the former current value among the two acquired current values.

The predetermined switch in the switch module corresponding to the phase branch is turned off based on the zero-crossing time instant by: subtracting, by the controller, a switch-off delay time period from the zero-crossing time instant to obtain a signal time instant, and determining a target current value corresponding to the signal time instant based on the descending slope; and sending, by the controller in response to an absolute value of a difference between the value of the acquired current and the target current value being less than a target threshold, a switch turn-off signal to the predetermined switch in the switch module corresponding to the phase branch to turn off the predetermined switch. The target threshold is equal to a difference between values of currents obtained in two adjacent acquisitions.

The switch-off delay time period is determined based on a mechanical time period required for turning off a relay switch. The controller sends a switch turn-off signal to the predetermined switch to control the predetermined switch (relay) to be turned off. The relay is turned off at the end of the mechanical time period. For each of the phase branches, the phase branch is turned off at the zero-crossing time instant of the electrical parameter of the phase branch at which the relay can be safely turned off, avoiding arcing, and protecting the switch.

In an embodiment of the present disclosure, different operations may be performed after the predetermined switch in the switch module corresponding to the phase branch is turned off, and are described below. It should be noted that the implementations in the following descriptions are merely illustrative, and do not represent all implementations of the present disclosure.

In an implementation, the inverter includes at least one switch module. The switch module includes multiple switches independently connected to the controller. After the predetermined switch is turned off, switch turn-off signals are sent to the closed switches simultaneously or sequentially to control the closed switches to be turned off. Connection lines between the switches and the controller correspond one-to-one with the switches.

In an implementation, the inverter includes a switch group. After the predetermined switch is turned off, a switch turn-off signal is sent to the switch group included in the inverter to control switches included in the switch group to be turned off.

Referring to FIG. 2 to FIG. 4, after the inverter sequentially controls the predetermined switches in the switch modules to be turned off, the remaining switch group and/or the closed switches are to be turned off.

For example, referring to FIG. 4, based on the phase branches, Kx1 in the switch module A is controlled to be turned off, Ky2 in the switch module B is controlled to be turned off, and Kz1 in the switch module C is controlled to be turned off (Kx1, Ky2, and Kz1 are predetermined switches in respective switch modules). Then, the controller sends switch turn-off signals to the closed switches (such as Kx2, Ky1 and Kz2) each of which is independently configured with a connection line, and to a switch group through a connection line for the switch group, to turn off the closed switches and the closed switches in the switch group. Alternatively, the controller may send switch turn-off signals sequentially to the closed switches each of which is independently configured with a connection line and send a switch turn-off signal to the switch group, to turn off the closed switches and the switch group sequentially. The closed switches in the switch group are turned off simultaneously.

Furthermore, when the switches are closed and it is required to connect the inverter circuit to the power grid through the switch module, the second switches in the switch group may be controlled to be turned on simultaneously, and then the switches each of which is independently configured with a connection line is controlled to be turned off simultaneously or sequentially.

Further, after determining that a usage of a current predetermined switch meets a predetermined condition, the controller determines another switch from the switch module corresponding to the current predetermined switch as a next predetermined switch. The predetermined condition includes a predetermined usage duration condition or a predetermined usage number condition. The switch module includes multiple switches independently connected to the controller.

Taking the three-phase inverter in FIG. 2 as an example, the three phase branches for outputting a three-phase alternating-current power correspond to three output ports (ports A, B and C as shown in FIG. 2) for outputting the three-phase alternating-current power. Each of the three output ports corresponds to a switch module for controlling outputs of the three phase branches (as shown in FIG. 2, port A corresponds to the switch module A, port B corresponds to the switch module B, and port C corresponds to the switch module C). The controller determines a switch (which is independently configured with a connection line for connecting to the controller) in each of the switch modules as a predetermined switch, and other switches may be used as backup switches (taking the switch module A in FIG. 2 as an example, if relay K1 is used as the predetermined switch, K2 is used as the backup switch; and if relay K2 is used as the predetermined switch, K1 is used as the backup switch, and the same applies to the switch modules B and C). The backup switch may be used to replace a current predetermined switch as a next predetermined switch, and is required to be configured with an independent connection line for connecting to the controller.

For example, when the usage of the current predetermined switch meets a predetermined usage duration condition or a predetermined usage number condition, one of the backup switches in the switch module corresponding to the current predetermined switch may be determined as a next predetermined switch for use. For each of the phase branches, multiple first switches may be configured and used alternately, to extend the service life of the relay switches. (For example, as shown in FIG. 2, K1, K4 and K5 are used as the predetermined switches, and K2, K3 and K6 are used as the backup switches, and when the usage of the predetermined switches K1, K4 and K5 meets the predetermined usage duration condition or the predetermined usage number condition, K2, K3 and K6 may be used as next predetermined switches and K1, K4 and K5 are used as the backup switches.

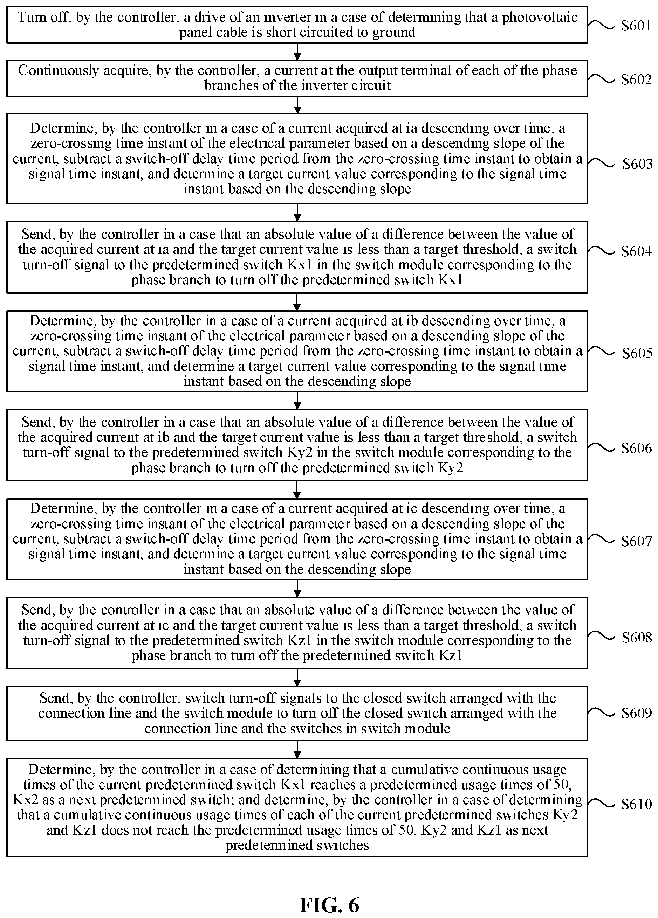

An inverter and a method thereof are provided in the above embodiments of the present disclosure. Based on the inverter shown in Figure 4, a method for shutting down an inverter operating abnormally is further provided according to the present disclosure. Reference is made to FIG. 6, which is a flowchart of a method for shutting down an inverter operating abnormally. The method includes the following steps S601 to S610.

In step S601, on determining that a photovoltaic panel cable is short circuited to ground, the controller turns off a drive of the inverter.

For example, it may be determined whether the inverter is short circuited in the implementation manners A1, A2, A3, and B.

The drive of the inverter includes an inverter circuit in the inverter.

In step S602, the controller continuously acquires a current at the output terminal of each of the phase branches of the inverter circuit.

Referring to FIG. 4, the currents of the phase branches are respectively acquired at points ia, ib and ic.

For example, for each of the phase branches, multiple current acquisitions may be performed in each of cycles of the phase power.

In step S603, on detecting a current acquired at point ia descending over time, the controller determines a zero-crossing time instant of the electrical parameter based on a descending slope of the current, subtracts a switch-off delay time period from the zero-crossing time instant to obtain a signal time instant, and determines a target current value corresponding to the signal time instant based on the descending slope.

In response to the photovoltaic panel cable being short circuited to ground (due to the diode reversely cut off, the current is not negative), the zero-crossing time instant may be a time instant corresponding to the current being 0, or may be a time instant corresponding to a fluctuation range in which the current decreases to a minimum value.

In an embodiment, a fitted time-current curve may be obtained based on all the acquired current values ia, and a slope of the curve is determined to predict the zero-crossing time instant of the electrical parameter.

In step S604, when an absolute value of a difference between the value of the acquired current at point ia and the target current value is less than a target threshold, the controller sends a switch turn-off signal to the predetermined switch Kx1 in the switch module corresponding to the phase branch to turn off the predetermined switch Kx1.

The target threshold is a difference between current values obtained in two adjacent acquisitions. The acquisitions may be performed multiple times in one cycle of the phase current, with a same time interval time.

In step S605, on detecting that a current acquired at point ib descending over time, the controller determines a zero-crossing time instant of the electrical parameter based on a descending slope of the current, subtracts a switch-off delay time period from the zero-crossing time instant to obtain a signal time instant, and determines a target current value corresponding to the signal time instant based on the descending slope.

In step S606, when an absolute value of a difference between the value of the acquired current at point ib and the target current value is less than a target threshold, the controller sends a switch turn-off signal to the predetermined switch Ky2 in the switch module corresponding to the phase branch to turn off the predetermined switch Ky2.

In step S607, on detecting that a current acquired at point ic descending over time, the controller determines a zero-crossing time instant of the electrical parameter based on a descending slope of the current, subtract a switch-off delay time period from the zero-crossing time instant to obtain a signal time instant, and determines a target current value corresponding to the signal time instant based on the descending slope.

In step S608, when an absolute value of a difference between the value of the acquired current at point ic and the target current value is less than a target threshold, the controller sends a switch turn-off signal to the predetermined switch Kz1 in the switch module corresponding to the phase branch to turn off the predetermined switch Kz1.

In step S609, the controller sends switch turn-off signals to the closed switches each of which is configured with an independent connection line and the switch group to turn off the closed switches each of which is configured with the independent connection line and the switches in switch group.

In step S610, on determining that a cumulative continuous usage times of the current predetermined switch Kx1 reaches a predetermined usage times of 50, the controller determines Kx2 as a next predetermined switch; and on determining that a cumulative continuous usage times of each of the current predetermined switches Ky2 and Kz1 does not reach the predetermined usage times of 50, the controller determines Ky2 and Kz1 as next predetermined switches

An inverter and a method thereof are provided in the above embodiments of the present disclosure. An apparatus for shutting down an inverter operating abnormally is further provided according to the present disclosure. An apparatus for shutting down an inverter operating abnormally according to an embodiment of the present disclosure is described below.

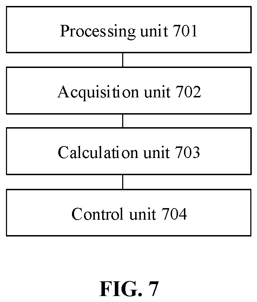

Reference is made to FIG. 7, which is a schematic structural diagram of an apparatus for shutting down an inverter operating abnormally. The apparatus for shutting down an inverter operating abnormally is applied to the controller in the inverter described above. The apparatus includes: a processing unit 701, an acquisition unit 702, a calculation unit 703, and a control unit 704.

The processing unit 701 is configured to turn off a drive of the inverter in response to determining that the inverter is short circuited.

The acquisition unit 702 is configured to continuously acquire an electrical parameter at the output terminal of each of the phase branches of the inverter circuit, where the electrical parameter includes a voltage or/and a current.

The calculation unit 703 is configured to determine, for each of the phase branches, a descending slope of the electrical parameter in response to the electrical parameter acquired at the output terminal of the phase branch descending over time, and determine a zero-crossing time instant of the electrical parameter.

The control unit 704 is configured to turn off a predetermined switch in a switch module corresponding to the phase branch based on the zero-crossing time instant, where the predetermined switch is determined in advance by the controller for controlling the switch module to be turned off, and a control terminal of the predetermined switch is independently connected to the controller.

With the apparatus for shutting down an inverter operating abnormally described above, the processing unit 701, on determining an abnormality, turns off a drive of the inverter, and then switches in the switch modules corresponding to the phase branches are turned off sequentially based on zero-crossing time instants of currents of the phase branches by using the acquisition unit 702, the calculation unit 703, and the control unit 704, preventing the switches from arcing, preventing the inverter from being short circuited, and preventing the inverter from damage.

In an embodiment, it is determined that a photovoltaic panel cable of the inverter is short circuited to ground. The processing unit 701 is configured to determine that the cable of the photovoltaic panel is short circuited to the ground when the following abnormal condition is met. The abnormal condition includes: an absolute value of a sum of vector values of currents simultaneously acquired at output terminals of N phase branches of an N-phase inverter being greater than a first threshold, where N>1, and the first threshold is a maximum absolute value of the sum of the vector values of the currents simultaneously acquired from the N phase branches while a power converter operates normally; or currents acquired at output terminals of N phase branches of an N-phase alternating-current power being all positive, where N> 1; or currents acquired at output terminals of any two phase branches of N phase branches of an N-phase alternating-current power being both positive, where N>2; or a current acquired at an output terminal of at least one phase branch of N phase branches exceeding a predetermined value, and a voltage acquired at the output terminal of the phase branch corresponding to the acquired current being positive, where the predetermined value is equal to a value of a current acquired at the output terminal of the phase branch while a power converter operates normally, the value of the acquired current is an average value or a maximum value determined after performing multiple acquisitions on the phase branch based on a switching frequency of the first switch, and the multiple acquisitions include current instantaneous effective value acquisitions or current instantaneous peak value acquisitions.

The calculation unit 703 is further configured to: determining a time instant at which a voltage acquired at the output terminal of the phase branch changes from negative to positive for a first time as a first zero-crossing time instant of the current of the phase branch; or determining, in a case of a current acquired at the output terminal of the phase branch descending over time, a second zero-crossing time instant of the current of the phase branch based on a descending slope of the current, and subtracting a switch-off delay time period from the second zero-crossing time instant to obtain a signal time instant.

The control unit 704 is further configured to send a switch turn-off signal to the predetermined switch in the switch module corresponding to the phase branch in a predetermined time period starting from the first zero-crossing time instant or the signal time instant, to turn off the predetermined switch. The predetermined time period is equal to a time period between a time instant at which the voltage acquired at the output terminal of the phase branch changes from negative to positive for the first time and a time instant at which the voltage acquired at the output terminal of the phase branch changes from positive to negative for a first time.

In another embodiment, it is determined that the inverter is short circuited due to that a positive terminal and a negative terminal of a bus are short circuited to ground. The processing unit 701 is configured to determine that the positive terminal and the negative terminal of the bus are short circuited to the ground when a descending slope of a voltage of the bus is greater than a descending slope of a voltage of the bus operating normally and a minimum voltage of the bus is less than an operating voltage of the inverter.

The calculation unit 703 is further configured to determine, in a case of a current acquired at the output terminal of the phase branch descending over time, the zero-crossing time instant of the current of the phase branch based on a descending slope of the current.

The control unit 704 is configured to subtract a switch-off delay time period from the zero-crossing time instant to obtain a signal time instant, and determine a target current value corresponding to the signal time instant based on the descending slope; and send, in response to an absolute value of a difference between the value of the acquired current and the target current value being less than a target threshold, a switch turn-off signal to the predetermined switch in the switch module corresponding to the phase branch to turn off the predetermined switch, where the target threshold is equal to a difference between values of currents obtained in two adjacent acquisitions.

In an embodiment, the controller is further configured to, after determining that a usage of a current predetermined switch meets a predetermined condition, determine another switch from the switch module corresponding to the current predetermined switch as a next predetermined switch. The predetermined condition includes a predetermined usage duration condition or a predetermined usage number condition. The switch module includes multiple switches independently connected to the controller.

In an embodiment, the controller is further configured to send switch turn-off signals to the closed switches simultaneously or sequentially, to control the switches to be turned off. Connection lines between the switches and the controller correspond one-to-one with the switches.

The controller is further configured to send a switch turn-off signal to a switch group included in the inverter, to control switches included in the switch group to be turned off.

An inverter, and a method and an apparatus thereof are provided in the above embodiments of the present disclosure. Based on this, a photovoltaic system is further provided according to the present disclosure. An inverter according to an embodiment of the present disclosure is described below.

The photovoltaic system includes a solar panel string and an inverter. The solar panel string is connected to an input terminal of the inverter, and the solar panel string is configured to provide a direct-current power to the inverter.

An output terminal of the inverter is connected to a power grid. The inverter is configured to convert a direct-current power from a direct-current power supply to an alternating-current power and transmit the alternating-current power to the power grid. The inverter is the inverter described above.

A device and a computer storage medium are further provided according to the embodiments of the present disclosure, for implementing the solutions according to the embodiments of the present disclosure.

The device includes a memory and a controller. The memory is configured to store instructions or codes. The controller is configured to execute the instructions or the codes to cause the device to perform the method for shutting down an inverter operating abnormally according to the embodiments of the present disclosure.

The computer storage medium stores codes. The codes, when being executed, cause a device to perform the method for shutting down an inverter operating abnormally according to the embodiment of the present disclosure.

The expressions "first", "second" (if any) and similar variant described in the embodiments of the present disclosure are used only for distinguish different names, rather than indicating the first or the second in a sequence.

From the above embodiments, those skilled in the art can clearly appreciate that all or a part of steps in the method according to the above embodiments may be implemented by means of software and a general hardware platform. Based on such understanding, technical solutions of the present disclosure may be embodied as a software product. The computer software product may be stored in a storage medium, such as a read-only memory (ROM)/RAM, a magnetic disc, or an optical disk, and the computer software product includes multiple instructions for enabling a computer device (which may be a personal computer, a server, or a network communication device such as a router) to perform the methods described in various embodiments or some parts of the embodiments of the present disclosure.

The embodiments are described in this specification in a progressive manner. Various embodiments may refer to each other for the same or similar parts, and each embodiment places emphasis on a difference from other embodiments. In particular, the apparatus embodiment is virtually similar to the method embodiment, and therefore is described briefly. For relevant details, reference can be made to the corresponding description of the method embodiment. Some or all modules may be selected according to an actual requirement to achieve an object of a solution of an embodiment. Those skilled in the art can understand and implement the embodiments without any creative effort.

Described above are only exemplary embodiments of the present disclosure, and are not intended to limit the protection scope of the present disclosure.

## Claims

1. An inverter, **characterized in that**:
the inverter comprises: an inverter circuit, a switch module, and a controller;
the switch module comprises a plurality of switches connected in series, an input terminal of the inverter circuit is connected to a direct-current power source, an output terminal of the inverter circuit is connected to a power grid through the switch module, and a control terminal of at least one switch of the plurality of switches is connected to the controller;
the inverter circuit is configured to invert a direct-current power outputted from the direct-current power source to an alternating-current power;
the switch module is configured to transmit the alternating-current power outputted from the output terminal of the inverter circuit to the power grid in response to the switch module being turned on, and stop transmitting the alternating-current power outputted from the output terminal of the inverter circuit in response to the switch module being turned off; and
the controller is configured to, in a case of determining that the inverter is short circuited, turn off a drive of the inverter, and turn off the at least one switch in the switch module that is connected to the controller.

2. The inverter according to claim 1, wherein the inverter circuit is a multi-phase inverter circuit, and an output terminal of each of phase branches of the multi-phase inverter circuit is connected to a switch module; wherein
control terminals of switches in all switch modules are independently connected to the controller; or
control terminals of first switches in the switch modules are independently connected to the controller, and control terminals of second switches in a same switch group are jointly connected to the controller, wherein the second switches in the same switch group correspond one-to-one with the switch modules in the inverter, the first switches in each of the switch modules comprise a part of switches in the switch module, and the second switches comprise switches other than the first switches in the switch module.

3. The inverter according to claim 2, wherein in response to the control terminals of the switches in all the switch modules being independently connected to the controller, each of the control terminals of the switches is connected to the controller through a corresponding connection line, and the connection line is configured to transmit a switch turn-off signal or a switch turn-on signal sent by the controller.

4. The inverter according to claim 3, wherein the controller is further configured to:
for each of the phase branches of the inverter circuit, control a switch in the switch module corresponding to the phase branch of the inverter circuit to be turned off based on a current at the output terminal of the phase branch; and
send switch turn-off signals to closed switches in all the switch modules connected to the inverter circuit simultaneously or sequentially, to control the closed switches in the switch modules connected to the inverter circuit to be turned off.

5. The inverter according to claim 2, wherein in response to the control terminals of the first switches in all the switch modules being independently connected to the controller and the control terminals of the second switches in the same switch group being jointly connected to the controller, each of the control terminals of the first switches is connected to the controller through a corresponding connection line, the control terminals of the second switches in the same switch group are connected to the controller through a same connection line, and the connection lines are configured to transmit a switch turn-off signal or a switch turn-on signal sent by the controller.

6. The inverter according to claim 5, wherein each of the switch modules comprises one first switch, and the controller is further configured to:
for each of the phase branches of the inverter circuit, control a first switch in a switch module corresponding to the phase branch of the inverter circuit to be turned off based on a current at the output terminal of the phase branch; and
send a switch turn-off signal to the switch group comprised in the inverter to control the second switches in the switch group to be turned off.

7. The inverter according to claim 5, wherein each of the switch modules comprises at least two first switches, and the controller is further configured to:
for each of the phase branches of the inverter circuit, control one of two first switches in a switch module corresponding to the phase branch of the inverter circuit to be turned off based on a current at the output terminal of the phase branch; and
send a switch turn-off signal to the switch group comprised in the inverter and closed first switches to control the second switches in the switch group and the closed first switches to be turned off.

8. The inverter according to any one of claims 1 to 4, 5 and 7, wherein the controller is further configured to, after determining that a usage of a current predetermined switch meets a predetermined condition, determine a switch other than the current predetermined switch from a switch module corresponding to the current predetermined switch as a next predetermined switch;
wherein the predetermined condition comprises a predetermined usage duration condition or a predetermined usage number condition, the predetermined switch is configured in advance by the controller for controlling the corresponding switch module to be turned off, and the predetermined switch is arranged with an independent connection line for connecting to the controller.

9. The inverter according to any one of claims 1 to 8, wherein
the case that the inverter is short circuited comprises a cable of a photovoltaic panel corresponding to the inverter being short circuited to ground and a positive terminal and a negative terminal of a bus being short circuited to ground;
the controller is further configured to:
in response to meeting a first abnormal condition for the cable of the photovoltaic panel corresponding to the inverter being short circuited to the ground, determine that the cable of the photovoltaic panel is short circuited to the ground; and
in response to meeting a second abnormal condition for the positive terminal and the negative terminal of the bus being short circuited to the ground, determine that the positive terminal and the negative terminal of the bus are short circuited to the ground;
the first abnormal condition comprises:
an absolute value of a sum of vector values of currents simultaneously acquired at output terminals of N phase branches of an N-phase inverter being greater than a first threshold, wherein N>1, and the first threshold is a maximum absolute value of the sum of the vector values of the currents simultaneously acquired from the N phase branches while a power converter operates normally; or
currents acquired at output terminals of N phase branches of an N-phase alternating-current power being all positive, wherein N>1; or
currents acquired at output terminals of any two phase branches of N phase branches of an N-phase alternating-current power being both positive, wherein N>2; or
a current acquired at an output terminal of at least one phase branch of N phase branches exceeding a predetermined value, and a voltage acquired at the output terminal of the phase branch corresponding to the acquired current being positive, wherein the predetermined value is equal to a value of a current acquired at the output terminal of the phase branch while a power converter operates normally, the value of the acquired current is an average value or a maximum value determined after performing a plurality of acquisitions on the phase branch based on a switching frequency of the first switch, and the plurality of acquisitions comprise current instantaneous effective value acquisitions or current instantaneous peak value acquisitions; and
the second abnormal condition comprises: a descending slope of a voltage of the bus being greater than a descending slope of a voltage of the bus operating normally, and a minimum voltage of the bus being less than an operating voltage of the inverter.

10. A method for shutting down an inverter operating abnormally, applied to the controller in the inverter according to any one of claims 1 to 9, wherein the method is **characterized by** comprising steps of:
turning off a drive of the inverter in response to determining that the inverter is short circuited;
continuously acquiring an electrical parameter at the output terminal of each of the phase branches of the inverter circuit, wherein the electrical parameter comprises a voltage or/and a current;
determining, for each of the phase branches, a zero-crossing time instant of the current of the phase branch based on the acquired electrical parameter of the phase branch; and
turning off a predetermined switch in a switch module corresponding to the phase branch based on the zero-crossing time instant, wherein the predetermined switch is determined in advance by the controller for controlling the switch module to be turned off, and a control terminal of the predetermined switch is independently connected to the controller.

11. The method according to claim 10, wherein in response to the inverter being short circuited due to that a cable of a photovoltaic panel corresponding to the inverter is short circuited to ground,
the step of determining, for each of the phase branches, a zero-crossing time instant of the current of the phase branch based on the acquired electrical parameter of the phase branch comprises:
determining a time instant at which a voltage acquired at the output terminal of the phase branch changes from negative to positive for a first time as a first zero-crossing time instant of the current of the phase branch; or
determining, in response to a current acquired at the output terminal of the phase branch descending over time, a second zero-crossing time instant of the current of the phase branch based on a descending slope of the current, and subtracting a switch-off delay time period from the second zero-crossing time instant to obtain a signal time instant; and
the step of turning off a predetermined switch in a switch module corresponding to the phase branch based on the zero-crossing time instant comprises:
sending a switch turn-off signal to the predetermined switch in the switch module corresponding to the phase branch in a predetermined time period starting from the first zero-crossing time instant or the signal time instant, to turn off the predetermined switch, wherein the predetermined time period is equal to a time period between a time instant at which the voltage acquired at the output terminal of the phase branch changes from negative to positive for the first time and a time instant at which the voltage acquired at the output terminal of the phase branch changes from positive to negative for a first time.

12. The method according to claim 10, wherein in response to the inverter being short circuited due to that a positive terminal and a negative terminal of a bus are short circuited to ground,
the step of determining, for each of the phase branches, a zero-crossing time instant of the current of the phase branch based on the acquired electrical parameter of the phase branch comprises:
determining, in response to a current acquired at the output terminal of the phase branch descending over time, the zero-crossing time instant of the current of the phase branch based on a descending slope of the current; and
the step of turning off a predetermined switch in a switch module corresponding to the phase branch based on the zero-crossing time instant comprises:
subtracting a switch-off delay time period from the zero-crossing time instant to obtain a signal time instant, and determining a target current value corresponding to the signal time instant based on the descending slope; and
sending, in response to an absolute value of a difference between the value of the acquired current and the target current value being less than a target threshold, a switch turn-off signal to the predetermined switch in the switch module corresponding to the phase branch to turn off the predetermined switch, wherein the target threshold is equal to a difference between values of currents obtained in two adjacent acquisitions.

13. An apparatus for shutting down an inverter operating abnormally, applied to the controller in the inverter according to any one of claims 1 to 9, wherein the apparatus is **characterized in**:
a processing unit, configured to turn off a drive of the inverter in response to determining that the inverter is short circuited;
an acquisition unit, configured to continuously acquire an electrical parameter at the output terminal of each of the phase branches of the inverter circuit, wherein the electrical parameter comprises a voltage or/and a current;
a calculation unit, configured to determine, for each of the phase branches, a descending slope of the electrical parameter in response to the electrical parameter acquired at the output terminal of the phase branch descending over time, and determine a zero-crossing time instant of the electrical parameter; and
a control unit, configured to turn off a predetermined switch in a switch module corresponding to the phase branch based on the zero-crossing time instant, wherein the predetermined switch is determined in advance by the controller for controlling the switch module to be turned off, and a control terminal of the predetermined switch is independently connected to the controller.

14. A photovoltaic system, **characterized in that**:
the photovoltaic system comprises a solar panel string and an inverter;
the solar panel string is connected to an input terminal of the inverter, and the solar panel string is configured to provide a direct-current power to the inverter; and
an output terminal of the inverter is connected to a power grid, the inverter is configured to convert a direct-current power from a direct-current power supply to an alternating-current power and transmit the alternating-current power to the power grid, and the inverter is the inverter according to any one of claims 1 to 9.
